# EUROPÄISCHE PATENTSCHRIFT

(11) **EP 3 381 757 B1**
(45) Veröffentlichungstag und Bekanntmachung des Hinweises auf die Patenterteilung: **19.08.2020**
(21) Anmeldenummer: 18163861.0
(22) Anmeldetag: 26.03.2018
(51) Int. Cl.: B60W 30/06, B60W 40/02, B60W 40/10, B60W 40/08, G08G 1/14, B62D 15/02, B60W 50/00, B60W 50/14, B60W 30/095

(54) **EVALUIERUNG DER KOMPLEXITÄT EINES PARKVORGANGS**
EVALUATION OF THE COMPLEXITY OF PARKING A VEHICLE
ÉVALUATION DE LA COMPLEXITÉ D'UN PROCESSUS DE STATIONNEMENT

(30) Priorität: 30.03.2017 DE 102017106844
(43) Veröffentlichungstag der Anmeldung: 03.10.2018
(73) Patentinhaber: Valeo Schalter und Sensoren GmbH, 74321 Bietigheim-Bissingen (DE)
(72) Erfinder: Prinzhausen, Stefanie, 74321 Bietigheim-Bissingen (DE); Haenisch, Stephan, 74321 Bietigheim-Bissingen (DE)
(74) Vertreter: Pothmann, Karsten

(56) Entgegenhaltungen:
- EP-A1- 3 226 096
- DE-A1-102007 002 261
- DE-A1-102007 018 517

## Beschreibung

Die vorliegende Erfindung betrifft ein Verfahren zur Evaluierung einer Komplexität eines Parkvorgangs für wenigstens eine Parklücke mit einem Fahrzeug.

Auch betrifft die vorliegende Erfindung ein Parkassistenzsystem zur Unterstützung bzw. Durchführung eines Parkvorgangs für wenigstens eine Parklücke mit einem Fahrzeug, mit wenigstens einem Sensor und einer Anzeigevorrichtung, wobei das Parkassistenzsystem ausgeführt ist, das obige Verfahren durchzuführen.

Des Weiteren betrifft die vorliegende Erfindung ein Fahrzeug mit einem obigen Parkassistenzsystem.

Das Parken ist für die Verwendung eines Fahrzeugs ein wichtiger Schritt, um die Benutzung des Fahrzeugs abzuschließen. Dies ist beispielsweise in urbanen Bereichen häufig schwierig aufgrund einer geringen Anzahl freier Parklücken. Darüber hinaus ist das Parken des Fahrzeugs besonders unangenehm, da der Zweck der Fahrt, nämlich das Erreichen eines Fahrtziels, bereits abgeschlossen ist. Das Parken des Fahrzeugs stellt also einen Vorgang dar, der üblicherweise als notwendig aber nicht erfreulich angesehen wird. Darüber hinaus entsteht eine große Anzahl von Fahrzeugschäden beim Parken des eigenen Fahrzeugs, oder durch andere Fahrzeuge, die in dessen Nähe geparkt werden.

Um das Parken des Fahrzeugs zu verbessern haben sich am Markt verschiedene Parkassistenzsysteme durchgesetzt, die von Abstandskontrollsystemen mit Ultraschallsensoren oder Radarsensoren, über Kamerasystemen zur Visualisierung des Einparkvorgangs sowie Systemen zur Anzeige eines idealen, manuell durchgeführten Parkvorgangs bis hin zu vollautomatischen Parksystemen, welche das Fahrzeug autonom in eine Parklücke bewegen, reichen.

Bekannt ist bei derartigen Parksystemen beispielsweise, die Parklücken zu vermessen und anhand der Größe, einer ggf. vorhandenen Gegenseite und der aktuellen Fahrzeugposition zu berechnen, ob eine Trajektorie berechnet und ein Parkvorgang durchgeführt werden können.

In diesem Zusammenhang ist aus der EP 1 352 782 B1 ein solches Parkunterstützungssystem bekannt. Das Parkunterstützungssystem umfasst eine Bildbeschaffungseinrichtung zum Beschaffen eines Bildes einer Sicht von einem Fahrzeug aus; eine Anzeigeeinrichtung zum Anzeigen des Bildes, das durch die Bildbeschaffungseinrichtung beschafft wird, auf einer Bildschirmanzeige, die in dem Fahrzeug bereitgestellt ist; eine Eingabeeinrichtung zum Eingeben einer Zielparkposition, an welcher das Fahrzeug zu parken ist, auf der Bildschirmanzeige; und eine Erfassungseinrichtung zum Erfassen einer relativen Beziehung zwischen dem Fahrzeug und der Zielparkposition; wobei das Parkunterstützungssystem weiter aufweist, eine Beurteilungseinrichtung zum Beurteilen, ob das Fahrzeug an der Zielparkposition geparkt werden kann oder nicht, basierend auf der relativen Beziehung, die durch die Erfassungseinrichtung erfasst wird, und wobei die Eingabeeinrichtung die Zielparkposition gemalt, einer gewünschten Position eines Fahrers einstellt.

Die DE 10 2011 100 277 A1 betrifft ein Verfahren zur Parametrierung eines Assistenzsystems eines Kraftfahrzeugs, bei dem zumindest ein voreingestellter Parameter zur Steuerung wenigstens einer Assistenzfunktion des Assistenzsystems automatisch an das individuelle Fahrverhalten eines Fahrers des Kraftfahrzeugs angepasst wird.

Die EP 1 486 797 A1 betrifft eine Vorrichtung und ein Verfahren zur Ermittlung der Länge einer Parklücke. Dazu sind eine vordere Sende- und Empfangseinrichtung im vorderen seitlichen Bereich des Fahrzeugs und eine hintere Sende- und Empfangseinrichtung im hinteren seitlichen Bereich des Fahrzeugs angeordnet, um mit diesen Einrichtungen jeweils ein anderes, die Parklücke begrenzendes Hindernis zu erfassen.

Auch ist aus der EP 1 685 002 B1 ein Verfahren zur Ermittlung einer Parklücke bekannt mit den Schritten Vermessen einer Parklücke und Ausgabe einer gemessenen Länge der Parklücke, Vergleichen der ermittelten Länge mit mindestens einem Grenzwert und Ermittlung eines Anzeigesignals, Ausgabe des Anzeigesignals an den Fahrer, Aufnahme von Fahrdynamiksignalen während eines Einparkvorganges, Bewertung des Einparkvorganges auf Grundlage der aufgenommenen Fahrdynamiksignale und Ausgabe eines Bewertungssignals, und Änderung des mindestens einen Grenzwertes in Abhängigkeit von dem Bewertungssignal und dem Anzeigesignal. Z DE 10 2007 002261 A1 beschreibt ein gattungsgemäßes Verfahren ähnlich zur Erfindung.

Diesen Systemen ist gemein, dass sie eine Parklücke zur Eignung für das Parken des Fahrzeugs ermitteln. Allerdings ist es trotzdem häufig schwierig, das Fahrzeug in der Parklücke wie gewünscht zu parken, beispielsweise wenn die Parklücke eine nur geringfügig größere Länge als das Fahrzeug aufweist. Anderseits werden teilweise Parklücken von der weiteren Betrachtung ausgeschlossen, obwohl das Fahrzeug dort unter rein technischen Aspekten geparkt werden könnte, die Länge jedoch einen nicht technisch bedingten Grenzwert für die minimale Länge unterschreitet, beispielsweise um eine komfortables Parken für den Fahrer zu ermöglichen. Hier ist eine Verbesserung gewünscht.

Ausgehend von dem oben genannten Stand der Technik liegt der Erfindung somit die Aufgabe zugrunde, ein Verfahren der oben genannten Art, ein Parkassistenzsystem zur Unterstützung bzw. Durchführung eines Parkvorgangs nach dem obigen Verfahren sowie ein Fahrzeug mit einem solchen Parkassistenzsystem anzugeben, die eine Erleichterung bei der Auswahl einer Parklücke und bei der Durchführung des Parkvorgangs ermöglichen.

Die Lösung der Aufgabe erfolgt erfindungsgemäß durch die Merkmale der unabhängigen Ansprüche. Vorteilhafte Ausgestaltungen der Erfindung sind in den Unteransprüchen angegeben.

Erfindungsgemäß ist somit ein Verfahren zur Evaluierung einer Komplexität eines Parkvorgangs für wenigstens eine Parklücke mit einem Fahrzeug angegeben, mit den Schritten Empfangen einer Mehrzahl Eingangsgrößen zur Beschreibung wenigstens eines Parameter des Parkvorgangs in der wenigstens einen Parklücke, Berechnen einer Einzelkomplexität des Parkvorgangs in der wenigstens einen Parklücke für jeden Parameter des Parkvorgangs, Berechnen der Komplexität des Parkvorgangs in der wenigstens einen Parklücke als Gesamtkomplexität basierend auf den Einzelkomplexitäten, und Ausgeben der berechneten Komplexität des Parkvorgangs in der wenigstens einen Parklücke.

Erfindungsgemäß ist außerdem ein Parkassistenzsystem zur Unterstützung bzw. Durchführung eines Parkvorgangs für wenigstens eine Parklücke mit einem Fahrzeug angegeben, mit wenigstens einem Sensor und einer Anzeigevorrichtung, wobei der wenigstens eine Sensor ausgeführt ist, eine Mehrzahl Eingangsgrößen zur Beschreibung wenigstens eines Parameter des Parkvorgangs in der wenigstens einen Parklücke zu empfangen, und das Parkassistenzsystem ausgeführt ist, das obige Verfahren durchzuführen, wobei die Anzeigevorrichtung ausgeführt ist, die berechnete Komplexität des Parkvorgangs in der wenigstens einen Parklücke anzuzeigen.

Weiter ist erfindungsgemäß ein Fahrzeug mit einem obigen Parkassistenzsystem angegeben.

Grundidee der vorliegenden Erfindung ist es also, über die prinzipielle Möglichkeit des Parkens eines Fahrzeugs hinausgehend festzustellen, mit welchem Aufwand das Parken eines Fahrzeugs in einer Parklücke durchgeführt werden kann. Der Aufwand wird hier durch die Komplexität ausgedrückt. Dazu wird eine Mehrzahl Parameter basierend auf Sensorinformationen, die als Eingangsgrößen bereitgestellt werden, bestimmt, um aus der Mehrzahl von Einzelkomplexitäten eine Gesamtkomplexität zu bestimmen. Somit können verschiedene Faktoren bei der Bestimmung der Komplexität des Parkvorgangs berücksichtigt werde. Im Ergebnis kann beispielsweise durch den Fahrer des Fahrzeugs oder durch das Fahrzeug bzw. das Parkassistenzsystem selber eine Parklücke mit einer geringen Komplexität ausgewählt werden, um das Parken des Fahrzeugs möglichst effizient durchführen zu können. Dadurch wird die Nutzung des Fahrzeugs insgesamt verbessert.

Eingangsgrößen können beliebige Sensorinformationen darstellen, die dem Parkassistenzsystem zur Durchführung des Verfahrens bereitgestellt werden. Daraus können verschiedene Parameter für die Berechnung der Komplexität des Parkvorgangs abgeleitet werden. Beispielsweis kann aus einer Umgebungskarte mit Hindernissen eine Breite und eine Tiefe einer Parklücke als Parameter ermittelt werden, wie auch eine mögliche Trajektorie zum Erreichen der Parklücke. Prinzipiell können die Parameter auch aus einer Kombination von Sensorinformationen gewonnen werden, indem basierend auf wenigstens zwei Sensoren aus einer Gruppe umfassend beispielsweise eine optische Kamera, einen Laserscanner, ein Ultraschallsensor oder ein Radar, gemeinsam eine Umgebungskarte mit Hindernissen erstellt wird. Die Parameter können im Wesentlichen beliebig daraus abgeleitet werden, beispielsweise als die bereits genannte Breite und Tiefe der Parklücke. Andere Eingangsgrößen können beispielsweise von anderen Assistenzsystemen des Fahrzeugs übermittelt werden, beispielsweise Kartendaten von einem Navigationssystem.

Breite und Tiefe der Parklücke werden zwar bereits heutzutage verwendet, um eine Parklücke auf Ihre prinzipielle Eignung zum Parken des Fahrzeugs zu überprüfen. Allerdings ist das Ergebnis auf eine solche Eignung beschränkt. Dabei werden teilweise sehr große Toleranzen angewendet, um das Parken komfortabel zu gestalten, und die technisch nicht erforderlich sind. Erfindungsgemäß können diese Toleranzen reduziert werden. Gleichzeitig kann durch die Bereitstellung Information bezüglich der Komplexität des Parkvorgangs eine Auswahlhilfe angegeben werden, um beispielsweise Parklücken, die vorher nicht als geeignet klassifiziert wurden, als geeignete Parklücken mit einer hohen Komplexität zu kennzeichnen. Dabei können Parklücken mit einer hohen Komplexität auch nachträglich als ungeeignet verworfen werden, entweder durch den Fahrer oder durch das Parkassistenzsystem. Im dem Falle, dass keine alternativen Parklücken bereitstehen, kann jedoch auch eine Parklücke mit einer hohen Komplexität ausgewählt werden.

Die Komplexität des Parkvorganges wird aus der Mehrzahl der Einzelkomplexitäten berechnet. Die Berechnung wird vorzugsweise durch Erfahrungswerte und empirische Bestimmungen gestützt.

Die Komplexität kann auf verschiedene Arten bestimmt und ausgegeben werden. Beispielsweise kann die Komplexität mit einem Komplexitätsgrad in Prozent berechnet werden, wobei beispielsweise 0% einem unmöglichen und 100% einem sehr leichten Parkvorgang bezogen auf eine Parklücke zu einem bestimmten Zeitpunkt entsprechen.

Das Parkassistenzsystem kann prinzipiell unterschiedlich ausgeführt sein, um den Fahrer bei dem Parkvorgang zu unterstützen oder den Parkvorgang teilweise oder vollständig autonom durchzuführen. Beispielsweise kann das Parkassistenzsystem zum autonomen Parken des Fahrzeugs ausgeführt sein, wobei der Fahrer lediglich die gewünschte Parklücke auswählt, und das Parkassistenzsystem den Parkvorgang autonom durchführt, indem es das Fahrzeug selbständig in der Parklücke parkt. Alternativ können verschiedene Grade an Autonomie des Parkassistenzsystems bereitgestellt werden, beispielsweise ein Parkassistenzsystem, welches den Fahrer dahingehend unterstützt, dass es den Fahrer instruiert, wie er den Parkvorgang durchführen soll. Ein einfaches Parkassistenzsystem unterstützt den Fahrer dadurch, dass es die Parklücke mit der Komplexität des Parkvorgangs anzeigt, und der Fahrer muss den Parkvorgang vollständig selber durchführen.

In vorteilhafter Ausgestaltung der Erfindung umfasst der Schritt des Empfangens einer Mehrzahl Eingangsgrößen zur Beschreibung wenigstens eines Parameter des Parkvorgangs in der wenigstens einen Parklücke das Empfangen von einer Mehrzahl Parameter aus einer Fahrzeugposition, einem Fahrzeugwinkel, einer Parklückengröße, einer Straßenbreite, einer Information über eine Gegenseite, eines Hindernisses in einer Trajektorie zum Erreichen der wenigstens einen Parklücke, eine Art einer inneren Parklückenbegrenzung, Verkehrsparameter im Bereich der wenigstens einen Parklücke, einem maximalen Lenkwinkel zum Erreichen der wenigstens einen Parklücke, einer Beschilderung der Parklücke, und einer Identifikation der Art der wenigstens einen Parklücke. Verkehrsparameter umfassen beispielsweise eine Vorbeifahrgeschwindigkeit, einen Straßentyp, eine Frequenz der Befahrung durch andere Verkehrsteilnehmer, oder ähnliches. Die Art der Parklücken kann beispielsweise durch Parken in Reihe (Längsaufstellung) oder Parken in Queraufstellung identifiziert werden. Dazu kann auch gehören, ob beispielsweise bei Längsaufstellung ein Parken auf dem Bordstein bzw. dem Fußweg erlaubt ist. Ausgehend von der Vielzahl möglicher Parameter kann somit eine sehr detaillierte Berechnung der Komplexität des Parkvorgangs durchgeführt werden.

In vorteilhafter Ausgestaltung der Erfindung umfasst der Schritt des Empfangens einer Mehrzahl Eingangsgrößen zur Beschreibung wenigstens eines Parameter des Parkvorgangs in der wenigstens einen Parklücke das Empfangen eines Stresslevels eines Fahrzeugführers. Hierbei handelt es sich also um einen fahrerabhängigen Faktor für das Parken des Fahrzeugs. Der Stresslevel kann beispielsweise durch einen Pulsmesser, der einen Puls des Fahrers überwacht, oder eine Innenraumkamera, die eine Augenbewegung bzw. ein Zwinkern des Fahrers überwacht, bestimmt werden. Je höher der Stresslevel des Fahrers ist, desto leichter muss das Parken in der Parklücke sein, damit der Fahrer bequem parken kann. Die Komplexität des Parkvorgangs wird also mit zunehmendem Stresslevel des Fahrers automatisch heraufgesetzt, so dass eine Parklücke schneller als nicht geeignet ausgeschlossen wird als bei einem niedrigen Stresslevel.

In vorteilhafter Ausgestaltung der Erfindung umfasst der Schritt des Berechnens der Komplexität des Parkvorgangs in der wenigstens einen Parklücke als Gesamtkomplexität basierend auf den Einzelkomplexitäten das Gewichten der Einzelkomplexitäten. Die Gewichtung kann fix sein, um bestimmte Parameter stärker zu berücksichtigen als andere. Alternativ oder zusätzlich kann die Gewichtung von dem Fahrer abhängen, beispielsweise durch eine Einstellung oder eine Sensorüberwachung des Fahrers. Beispielsweise kann bei einem Fahrer, der nur schlecht in Queraufstellung parkt, dies bei der Art der Parklücke entsprechend gewichtet werden. Alternativ oder zusätzlich kann die Gewichtung von anderen Parametern abhängen. Beispielsweise kann eine Begrenzung der Parklücke mit einer Bodenmarkierung gegenüber einer baulichen Begrenzung der Parklücke mit einem Bordstein oder einer Mauer dazu führen, dass die Abmessungen der Parklücke unterschiedlich bewertet werden. So kann ohne innere Begrenzung der Parklücke eine niedrige Gewichtung erfolgen, bei einer Begrenzung mit einem Bordstein eine mittlere Gewichtung, und bei einer Begrenzung mit einer Wand eine hohe Gewichtung.

In vorteilhafter Ausgestaltung der Erfindung umfasst der Schritt des Berechnens der Komplexität des Parkvorgangs in der wenigstens einen Parklücke eine Vorfilterung basierend auf einer erkannten Parkbeschränkung. Die Vorfilterung betrifft beispielsweise eine Klassifizierung, ob für eine Parklücke ein Park- oder gar Halterverbot vorliegt, oder ob beispielsweise an einer Straße wie einer Autobahn geparkt werden soll, wo das Parken prinzipiell nicht zulässig ist.

In vorteilhafter Ausgestaltung der Erfindung umfasst der Schritt des Ausgebens der berechneten Komplexität des Parkvorgangs in der wenigstens einen Parklücke das Anzeigen der wenigstens einen Parklücke und das Darstellen der Komplexität des Parkvorgangs in der wenigstens einen Parklücke. Die Anzeige kann beispielsweise in der Form einer Liste von möglichen Parklücken erfolgen, wobei für jede Parklücke ihre Komplexität dargestellt wird. Die Anzeige kann alternativ oder zusätzlich in der Form einer Karte erfolgen, in welcher die Parklücke markiert und mit der Komplexität dargestellt wird. Alternativ oder zusätzlich kann eine Überlagerung beispielsweise eines Bildes einer Umgebungskamera mit einer Darstellung der Parklücke und ihrer Komplexität erfolgen.

In vorteilhafter Ausgestaltung der Erfindung umfasst der Schritt des Ausgebens der berechneten Komplexität des Parkvorgangs in der wenigstens einen Parklücke das Anzeigen der Gesamtkomplexität als ein Prozentwert für die Komplexität des Parkvorgangs. Eine entsprechende Angabe ist leicht verständlich und kann einfach dargestellt werden. Dabei kann ein hoher Prozentwert entweder eine hohe Komplexität oder eine niedrige Komplexität bedeuten.

In vorteilhafter Ausgestaltung der Erfindung umfasst der Schritt des Ausgebens der berechneten Komplexität des Parkvorgangs in der wenigstens einen Parklücke das Anzeigen der Gesamtkomplexität als eine farbliche Kodierung für die Komplexität des Parkvorgangs. Die farbliche Kodierung kann leicht erkannt werden, was die Auswahl einer geeigneten Parklücke für das Parken erleichtert. Hier kann ein an sich übliches Schema beispielsweise mit den Farben grün für niedrige Komplexität, gelb für mittlere Komplexität, und rot für hohe Komplexität verwendet werden.

In vorteilhafter Ausgestaltung der Erfindung umfasst das Verfahren die gleichzeitige Evaluierung einer Komplexität eines Parkvorgangs für eine Mehrzahl Parklücken und das gemeinsame Ausgeben der berechneten Komplexität des Parkvorgangs in der Mehrzahl Parklücken. Es wird also für eine Mehrzahl Parklücken die Komplexität des entsprechenden Parkvorgangs ermittelt, so dass basierend auf der Komplexität eine Auswahl der am besten geeigneten Parklücke getroffen werden kann.

In vorteilhafter Ausgestaltung der Erfindung weist das Parkassistenzsystem eine Benutzerschnittstelle zur Auswahl einer Parklücke auf, und das Parkassistenzsystem ist ausgeführt, den Parkvorgang basierend auf der Auswahl der Parklücke zu unterstützen bzw. durchzuführen. Das Parkassistenzsystem kann unterschiedlich ausgeführt sein, beispielsweise als System zum autonomen Parken des Fahrzeugs, bei dem der Fahrer lediglich die gewünschte Parklücke auswählt, und das Parkassistenzsystem den Parkvorgang autonom durchführt, indem es das Fahrzeug selbständig in der Parklücke parkt. Alternativ können verschiedene Grade an Autonomie des Parkassistenzsystems bereitgestellt werden, beispielsweise ein Parkassistenzsystem, welches den Fahrer dahingehend unterstützt, dass es den Fahrer instruiert, wie er den Parkvorgang durchführen soll. Ein einfaches Parkassistenzsystem unterstützt den Fahrer dadurch, dass es die Parklücke mit der Komplexität des Parkvorgangs anzeigt, und der Fahrer muss den Parkvorgang vollständig selber durchführen.

In vorteilhafter Ausgestaltung der Erfindung ist die Benutzerschnittstelle integral mit der Anzeigevorrichtung ausgeführt, vorzugsweise nach der Art eines Touchscreens. Dies ermöglicht eine besonders komfortable Benutzung des Parkassistenzsystems.

Nachfolgend wird die Erfindung unter Bezugnahme auf die anliegende Zeichnung anhand bevorzugter Ausführungsformen näher erläutert. Merkmale verschiedener Ausführungsbeispiele sind übertragbar von einem Ausführungsbeispiel auf ein anderes.

Es zeigt
- Fig. 1: ein Ablaufdiagram eines Verfahrens zur Evaluierung einer Komplexität eines Parkvorgangs mit einem Parkassistenzsystem gemäß einer ersten, bevorzugten Ausführungsform, und
- Fig. 2: eine schematische Ansicht eines Fahrzeugs mit dem Parkassistenzsystem gemäß der ersten Ausführungsform bei einem Parkvorgang.

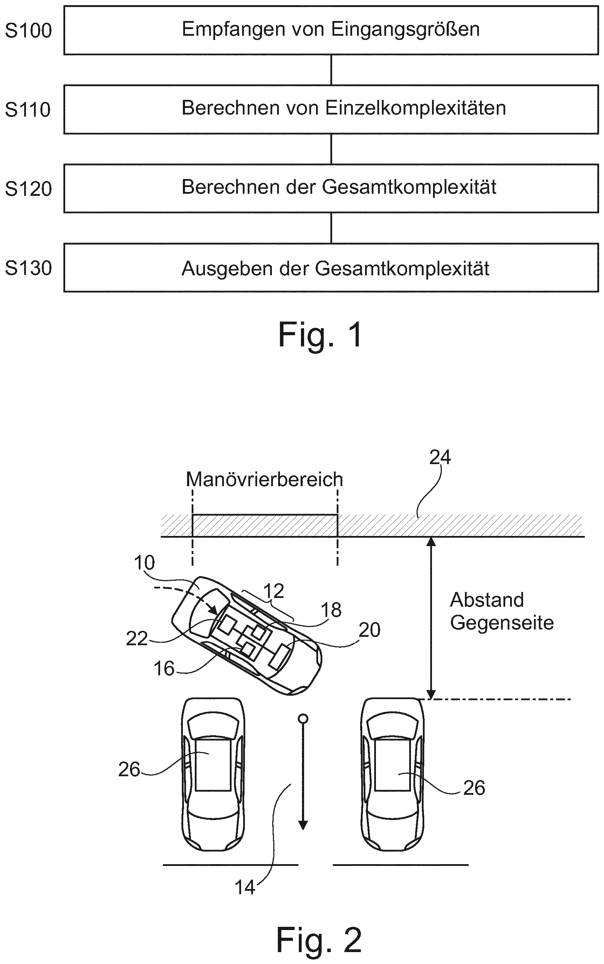

Die Figur 2 zeigt ein Fahrzeug 10 mit einem Parkassistenzsystem 12 gemäß einer ersten, bevorzugten Ausführungsform.

Das Parkassistenzsystem 12 ist zur Unterstützung bzw. Durchführung eines Parkvorgangs für eine Parklücke 14 mit dem Fahrzeug 10 ausgeführt. Das Parkassistenzsystem 12 umfasst gemäß dem ersten Ausführungsbeispiel zwei Sensoren 16, 18 und eine Anzeigevorrichtung 20. Die Sensoren 16, 18 umfassen einen ersten Sensor 16, der als Kamera ausgeführt ist, und einen zweiten Sensor 18, der als Laserscanner ausgeführt ist, und sind an dem Fahrzeug 10 angebracht. Außerdem umfasst das Parkassistenzsystem 12 eine Steuerungseinrichtung 22 zur Durchführung eines Verfahrens zur Evaluierung einer Komplexität eines Parkvorgangs für die Parklücke 14 mit dem Fahrzeug 10, welches nachstehend unter Bezug auf Fig. 1 beschrieben ist.

Das Parkassistenzsystem 12 ist hier als System zum autonomen Parken des Fahrzeugs 10 ausgeführt, bei dem der Fahrer lediglich eine gewünschte Parklücke 14 auswählt. Davon ausgehend parkt das Parkassistenzsystem 12 das Fahrzeug 10 selbständig in der Parklücke 14. Die Parklücke 14 befindet sich in Fig. 2 zwischen zwei Hindernissen 26, die hier geparkte Fahrzeuge sind, und wird von diesen begrenzt.

Das Verfahren beginnt mit Schritt S100, der das Empfangen einer Mehrzahl Eingangsgrößen zur Beschreibung wenigstens eines Parameter des Parkvorgangs in der wenigstens einen Parklücke 14 betrifft. Entsprechend werden von der Kamera 16 und dem Laserscanner 18 Umgebungsinformationen als Sensorinformationen bereitgestellt. Aus den Umgebungsinformationen werden vorliegend eine Mehrzahl Parameter für die Berechnung der Komplexität des Parkvorgangs abgeleitet. Diese Parameter betreffen in diesem Ausführungsbeispiel eine Breite und eine Tiefe der Parklücke 14, wie auch eine mögliche Trajektorie zum Erreichen der Parklücke 14. Weitere Parameter des Parkvorgangs in der Parklücke 14 sind eine Fahrzeugposition, ein Fahrzeugwinkel, eine Straßenbreite, eine Information über eine Gegenseite 24 der Parklücke 14, eine Information über ein Hindernis 26 in einer Trajektorie zum Erreichen der Parklücke 14, sowie eine Art der Parklückenbegrenzung. Zusätzlich empfängt die Steuerungseinheit 22 in diesem Ausführungsbeispiel von einem Navigationssystem Verkehrsparameter im Bereich der Parklücke 14, eine Beschilderung der Parklücke 14, und eine Identifikation der Art der Parklücke 14. Die Verkehrsparameter umfassen hier eine Vorbeifahrgeschwindigkeit, einen Straßentyp sowie eine Frequenz der Befahrung durch andere Verkehrsteilnehmer. Die Art der Parklücke 14 betrifft das Parken in Reihe (Längsaufstellung) oder in Queraufstellung mit einer Information in Bezug auf das Parken auf dem Bordstein bzw. dem Fußweg. Außerdem wird von dem Fahrzeug 10 ein maximaler Lenkwinkel zum Erreichen der Parklücke 14 empfangen. Zusätzlich wird von der Steuerungseinheit 22 ein Stresslevel des Fahrzeugführers, d.h. des Fahrers empfangen. Der Stresslevel wird in diesem Ausführungsbeispiel mit einer Innenraumkamera des Fahrzeugs 10, die eine Augenbewegung bzw. ein Zwinkern des Fahrers überwacht, bestimmt.

In Schritt S110 erfolgt das Berechnen einer Einzelkomplexität des Parkvorgangs in der Parklücke 14 für jeden Parameter des Parkvorgangs, der in Schritt S100 abgeleitet oder bestimmt wurde. Entsprechend wird beispielsweise ausgehend von einer Fahrzeuglänge Fl und einer Lückenlänge Fl+x eine Einzelkomplexität unter Berücksichtigung eines minimalen Überschusses Xₘᵢₙ der Parklücke 14 und eines maximalen Überschusses Xₘₐₓ der Parklücke 14 berechnet. Die Einzelkomplexität ergibt sich hier aus dem Quotienten (x - Xₘᵢₙ) / (Xₘₐₓ - Xₘᵢₙ). In diesem Ausführungsbeispiel ergibt sich bei einer Lückenlänge größer oder gleich der Fahrzeuglänge Fl plus Xₘₐₓ eine minimale Einzelkomplexität von 1.

Außerdem wird eine Einzelkomplexität basierend auf dem Stresslevel des Fahrers bestimmt. Je höher der Stresslevel, desto höher die entsprechende Einzelkomplexität. Hier ist bei einem hohen Stresslevel die Einzelkomplexität Null, und bei einem minimalen Stresslevel ergibt sich eine minimale Einzelkomplexität von 1.

Die Berechnung der Einzelkomplexitäten wird abhängig von dem jeweiligen Parameter durch Erfahrungswerte und empirische Bestimmungen gestützt.

In Schritt S120 erfolgt das Berechnen der Komplexität des Parkvorgangs in der Parklücke 14 als Gesamtkomplexität basierend auf den Einzelkomplexitäten. Dazu werden die Einzelkomplexitäten gewichtet und aufsummiert. Die Gewichtung ist basierend auf Erfahrungswerten und empirischen Bestimmungen vorgegeben und wird von dem Fahrer durch eine Einstellung oder eine Sensorüberwachung des Fahrers modifiziert, beispielsweise bei einem Fahrer, der nur schlecht in Queraufstellung parkt. Zusätzlich hängt die Gewichtung von anderen Parametern ab, indem beispielsweise eine Begrenzung der Parklücke 14 mit einer Bodenmarkierung gegenüber einer baulichen Begrenzung der Parklücke 14 mit einem Bordstein oder einer Mauer dazu führt, dass die Abmessungen der Parklücke 14 unterschiedlich bewertet werden. So erfolgt ohne innere Begrenzung der Parklücke 14 eine niedrige Gewichtung der entsprechenden Einzelkomplexität, bei einer Begrenzung mit einem Bordstein erfolgt eine mittlere Gewichtung, und bei einer Begrenzung mit einer Wand eine hohe Gewichtung der entsprechenden Einzelkomplexität.

Vorliegend sind die gewichteten Einzelkomplexitäten kleiner oder gleich 1. Die Summe der gewichteten Einzelkomplexitäten wird in eine Komplexität mit einem Komplexitätsgrad in Prozent umgerechnet. Vorliegend entspricht ein Komplexitätsgrad von 0% einem unmöglichen und ein Komplexitätsgrad von 100% einem sehr leichten Parkvorgang bezogen auf eine jeweilige Parklücke 14 zu einem bestimmten Zeitpunkt.

Zusätzlich erfolgt eine Vorfilterung basierend auf einer erkannten Parkbeschränkung. Dies betrifft eine Klassifizierung, ob für eine Parklücke 14 ein Park- oder gar Halterverbot vorliegt, oder ob beispielsweise an einer Straße wie einer Autobahn geparkt werden soll, wo das Parken prinzipiell nicht zulässig ist. Die Komplexität wird in diesem Fall auf maximal gesetzt, d.h. auf Null.

In Schritt S130 erfolgt das Ausgeben der berechneten Komplexität des Parkvorgangs in der Parklücke 14 mit der Anzeigevorrichtung 20. Dazu werden mögliche Parklücken 14 in einer Kartenansicht dargestellt, in welcher jede Parklücke 14 markiert und mit ihrer Komplexität dargestellt ist. Die jeweilige Komplexität des Parkvorgangs wird dadurch angezeigt, dass eine farbliche Kodierung für die Komplexität des Parkvorgangs für jede Parklücke 14 erfolgt, und zusätzlich der oben berechnete Prozentwert der Komplexität ausgegeben wird. Grün wird für eine niedrige Komplexität, gelb für mittlere Komplexität, und rot für hohe Komplexität verwendet.

Die Anzeigevorrichtung 20 ist als Touchscreen ausgeführt, und dient gleichzeitig als Benutzerschnittstelle 20 zur Auswahl einer Parklücke 14. Entsprechend kann im Anschluss an Schritt S130 über die Anzeigevorrichtung 20 eine angezeigte Parklücke 14 mit einer Fingerbedienung ausgewählt werden. Daraufhin führt das Parkassistenzsystem 12 den Parkvorgang für die ausgewählte Parklücke 14 automatisch durch.

**Bezugszeichenliste**

| | |
|---|---|
| Fahrzeug | 10 |
| Parkassistenzsystem | 12 |
| Parklücke | 14 |
| erster Sensor, Kamera | 16 |
| zweiter Sensor, Laserscanner | 18 |
| Anzeigevorrichtung, Benutzerschnittstelle | 20 |
| Steuerungseinheit | 22 |
| Gegenseite | 24 |
| Hindernis | 26 |

## Patentansprüche

1. Verfahren zur Evaluierung einer Komplexität eines Parkvorgangs für wenigstens eine Parklücke (14) mit einem Fahrzeug (10), mit den Schritten Empfangen einer Mehrzahl Eingangsgrößen zur Beschreibung wenigstens eines Parameter des Parkvorgangs in der wenigstens einen Parklücke (14), Berechnen einer Einzelkomplexität des Parkvorgangs in der wenigstens einen Parklücke (14) für jeden Parameter des Parkvorgangs,
Berechnen der Komplexität des Parkvorgangs in der wenigstens einen Parklücke (14) als Gesamtkomplexität basierend auf den Einzelkomplexitäten, und Ausgeben der berechneten Komplexität des Parkvorgangs in der wenigstens einen Parklücke (14).

2. Verfahren nach Anspruch 1, **dadurch gekennzeichnet, dass**
der Schritt des Empfangens einer Mehrzahl Eingangsgrößen zur Beschreibung wenigstens eines Parameter des Parkvorgangs in der wenigstens einen Parklücke (14) das Empfangen von einer Mehrzahl Parameter aus einer Fahrzeugposition, einem Fahrzeugwinkel, einer Parklückengröße, einer Straßenbreite, einer Information über eine Gegenseite (24), eines Hindernisses in einer Trajektorie zum Erreichen der wenigstens einen Parklücke (14), eine Art einer inneren Parklückenbegrenzung, Verkehrsparameter im Bereich der wenigstens einen Parklücke (14), einem maximalen Lenkwinkel zum Erreichen der wenigstens einen Parklücke (14), einer Beschilderung der Parklücke (14), und einer Identifikation der Art der wenigstens einen Parklücke (14) umfasst.

3. Verfahren nach einem der vorhergehenden Ansprüche 1 oder 2, **dadurch gekennzeichnet, dass**
der Schritt des Empfangens einer Mehrzahl Eingangsgrößen zur Beschreibung wenigstens eines Parameter des Parkvorgangs in der wenigstens einen Parklücke (14) das Empfangen eines Stresslevels eines Fahrzeugführers umfasst.

4. Verfahren nach einem der vorhergehenden Ansprüche, **dadurch gekennzeichnet, dass**
der Schritt des Berechnens der Komplexität des Parkvorgangs in der wenigstens einen Parklücke (14) als Gesamtkomplexität basierend auf den Einzelkomplexitäten das Gewichten der Einzelkomplexitäten umfasst.

5. Verfahren nach einem der vorhergehenden Ansprüche, **dadurch gekennzeichnet, dass**
der Schritt des Berechnens der Komplexität des Parkvorgangs in der wenigstens einen Parklücke (14) eine Vorfilterung basierend auf einer erkannten Parkbeschränkung umfasst.

6. Verfahren nach einem der vorhergehenden Ansprüche, **dadurch gekennzeichnet, dass**
der Schritt des Ausgebens der berechneten Komplexität des Parkvorgangs in der wenigstens einen Parklücke (14) das Anzeigen der wenigstens einen Parklücke (14) und das Darstellen der Komplexität des Parkvorgangs in der wenigstens einen Parklücke (14) umfasst.

7. Verfahren nach einem der vorhergehenden Ansprüche, **dadurch gekennzeichnet, dass**
der Schritt des Ausgebens der berechneten Komplexität des Parkvorgangs in der wenigstens einen Parklücke (14) das Anzeigen der Gesamtkomplexität als ein Prozentwert für die Komplexität des Parkvorgangs umfasst.

8. Verfahren nach einem der vorhergehenden Ansprüche, **dadurch gekennzeichnet, dass**
der Schritt des Ausgebens der berechneten Komplexität des Parkvorgangs in der wenigstens einen Parklücke (14) das Anzeigen der Gesamtkomplexität als eine farbliche Kodierung für die Komplexität des Parkvorgangs umfasst.

9. Verfahren nach einem der vorhergehenden Ansprüche, **dadurch gekennzeichnet, dass**
das Verfahren die gleichzeitige Evaluierung einer Komplexität eines Parkvorgangs für eine Mehrzahl Parklücken (14) und das gemeinsame Ausgeben der berechneten Komplexität des Parkvorgangs in der Mehrzahl Parklücken (14) umfasst.

10. Parkassistenzsystem (12) zur Unterstützung bzw. Durchführung eines Parkvorgangs für wenigstens eine Parklücke (14) mit einem Fahrzeug (10), mit wenigstens einem Sensor (16, 18) und einer Anzeigevorrichtung (20), wobei der wenigstens eine Sensor (16, 18) ausgeführt ist, eine Mehrzahl Eingangsgrößen zur Beschreibung wenigstens eines Parameters des Parkvorgangs in der wenigstens einen Parklücke (14) zu empfangen, und das Parkassistenzsystem (12) ausgeführt ist, das Verfahren nach einem der vorhergehenden Ansprüche durchzuführen, wobei
die Anzeigevorrichtung (20) ausgeführt ist, die berechnete Komplexität des Parkvorgangs in der wenigstens einen Parklücke (14) anzuzeigen.

11. Parkassistenzsystem (12) nach Anspruch 10, **dadurch gekennzeichnet, dass** das Parkassistenzsystem (12) eine Benutzerschnittstelle (20) zur Auswahl einer Parklücke (14) aufweist, und
das Parkassistenzsystem (12) ausgeführt ist, den Parkvorgang basierend auf der Auswahl der Parklücke (14) zu unterstützen bzw. durchzuführen.

12. Parkassistenzsystem (12) nach Anspruch 11, **dadurch gekennzeichnet, dass** die Benutzerschnittstelle (20) integral mit der Anzeigevorrichtung (20) ausgeführt ist, vorzugsweise nach der Art eines Touchscreens.

13. Fahrzeug (10) mit einem Parkassistenzsystem (12) nach einem der vorhergehenden Ansprüche 10 bis 12.

## Claims

1. Method for evaluating a complexity level of a parking process for at least one parking space (14) with a vehicle (10), having the steps
receiving a multiplicity of input variables for describing at least one parameter of the parking process of the at least one parking space (14),
calculating an individual complexity level of the parking process in the at least one parking space (14) for each parameter of the parking process,
calculating the complexity level of the parking process in the at least one parking space (14) as an overall complexity level based on the individual complexity levels, and
outputting the calculated complexity levels of the parking process in the at least one parking space (14).

2. Method according to Claim 1, **characterized in that** the step of receiving a multiplicity of input variables for describing at least one parameter of the parking process in the at least one parking space (14) comprises receiving a multiplicity of parameters from a vehicle position, a vehicle angle, a size of a parking space, a road width, information about an oncoming side (24), an obstacle in a trajectory for reaching the at least one parking space (14), a type of inner parking space boundary, traffic parameters in the region of the at least one parking space (14), a maximum steering angle for reaching the at least one parking space (14), description of the parking space (14), and an identification of the type of the at least one parking space (14).

3. Method according to one of the preceding Claims 1 and 2, **characterized in that**
the step of receiving a multiplicity of input variables for describing at least one parameter of the parking process in the at least one parking space (14) comprises receiving a stress level of a vehicle driver.

4. Method according to one of the preceding claims, **characterized in that**
the step of calculating the complexity level of the parking process in the at least one parking space (14) as an overall complexity level based on the individual complexity levels comprises the weighting of the individual complexity levels.

5. Method according to one of the preceding claims, **characterized in that**
the step of calculating the complexity level of the parking process in the at least one parking space (14) comprises pre-filtering based on a detected parking limitation.

6. Method according to one of the preceding claims, **characterized in that**
the step of outputting the calculated complexity level of the parking process in the at least one parking space (14) comprises displaying the at least one parking space (14) and representing the complexity level of the parking process in the at least one parking space (14).

7. Method according to one of the preceding claims, **characterized in that**
the step of outputting the calculated complexity level of the parking process in the at least one parking space (14) comprises displaying the overall complexity level as a percentage value for the complexity level of the parking process.

8. Method according to one of the preceding claims, **characterized in that**
the step of outputting the calculated complexity level of the parking process in the at least one parking space (14) comprises displaying the overall complexity level as coloured coding for the complexity level of the parking process.

9. Method according to one of the preceding claims, **characterized in that**
the method comprises simultaneous evaluation of a complexity level of a parking process for a multiplicity of parking spaces (14) and the common outputting of the calculated complexity level of the parking process in the multiplicity of parking spaces (14) .

10. Parking assistance system (12) for assisting or carrying out a parking process for at least one parking space (14) with a vehicle (10), with at least one sensor (16, 18) and a display device (20), wherein the at least one sensor (16, 18) is designed to receive a multiplicity of input variables for describing at least one parameter of the parking process in the at least one parking space (14), and the parking assistance system (12) is designed to carry out the method according to one of the preceding claims, wherein the display device (20) is designed to display the calculated complexity level of the parking process in the at least one parking space (14).

11. Parking assistance system (12) according to Claim 10, **characterized in that** the parking assistance system (12) has a user interface (20) for selecting a parking space (14), and
the parking assistance system (12) is designed to assist or carry out the parking process on the basis of the selection of the parking space (14).

12. Parking assistance system (12) according to Claim 11, **characterized in that** the user interface (20) is embodied in an integral fashion with the display device (20), preferably in the manner of a touch screen.

13. Vehicle (10) having a parking assistance system (12) according to one of the preceding Claims 10 to 12.

## Revendications

1. Procédé d'évaluation d'une complexité d'une manœuvre de stationnement pour au moins un emplacement de stationnement (14) avec un véhicule (10), comprenant les étapes suivantes
réception d'une pluralité de grandeurs d'entrée destinées à décrire au moins un paramètre de la manœuvre de stationnement dans l'au moins un emplacement de stationnement (14),
calcul d'une complexité individuelle de la manœuvre de stationnement dans l'au moins un emplacement de stationnement (14) pour chaque paramètre de la manœuvre de stationnement,
calcul de la complexité de la manœuvre de stationnement dans l'au moins un emplacement de stationnement (14) en tant que complexité globale en se basant sur les complexités individuelles et
délivrance en sortie de la complexité calculée de la manœuvre de stationnement dans l'au moins un emplacement de stationnement (14).

2. Procédé selon la revendication 1, **caractérisé en ce que** l'étape de réception d'une pluralité de grandeurs d'entrée destinées à décrire au moins un paramètre de la manœuvre de stationnement dans l'au moins un emplacement de stationnement (14) comprend la réception d'une pluralité de paramètres depuis une position de véhicule, d'un angle de véhicule, d'une taille d'emplacement de stationnement, d'une largeur de route, d'une information à propos d'un côté opposé (24), d'un obstacle dans une trajectoire pour atteindre l'au moins un emplacement de stationnement (14), d'une nature d'une délimitation intérieure de l'emplacement de stationnement, de paramètres de trafic dans la zone de l'au moins un emplacement de stationnement (14), d'un angle de braquage maximal pour atteindre l'au moins un emplacement de stationnement (14), d'une signalisation de l'emplacement de stationnement (14) et d'une identification de la nature de l'au moins un emplacement de stationnement (14).

3. Procédé selon la revendication 1 ou 2, **caractérisé en ce que** l'étape de réception d'une pluralité de grandeurs d'entrée destinées à décrire au moins un paramètre de la manœuvre de stationnement dans l'au moins un emplacement de stationnement (14) comprend la réception d'un niveau de stress d'un conducteur de véhicule.

4. Procédé selon l'une des revendications précédentes, **caractérisé en ce que** l'étape de calcul de la complexité de la manœuvre de stationnement dans l'au moins un emplacement de stationnement (14) en tant que complexité globale en se basant sur les complexités individuelles comprend la pondération des complexités individuelles.

5. Procédé selon l'une des revendications précédentes, **caractérisé en ce que** l'étape de calcul de la complexité de la manœuvre de stationnement dans l'au moins un emplacement de stationnement (14) comprend un préfiltrage basé sur une restriction de stationnement reconnue.

6. Procédé selon l'une des revendications précédentes, **caractérisé en ce que** l'étape de délivrance en sortie de la complexité calculée de la manœuvre de stationnement dans l'au moins un emplacement de stationnement (14) comprend l'affichage de l'au moins un emplacement de stationnement (14) et la représentation de la complexité de la manœuvre de stationnement dans l'au moins un emplacement de stationnement (14).

7. Procédé selon l'une des revendications précédentes, **caractérisé en ce que** l'étape de délivrance en sortie de la complexité calculée de la manœuvre de stationnement dans l'au moins un emplacement de stationnement (14) comprend l'affichage de la complexité globale sous la forme d'une valeur en pourcentage pour la complexité de la manœuvre de stationnement.

8. Procédé selon l'une des revendications précédentes, **caractérisé en ce que** l'étape de délivrance en sortie de la complexité calculée de la manœuvre de stationnement dans l'au moins un emplacement de stationnement (14) comprend l'affichage de la complexité globale sous la forme d'un codage en couleur pour la complexité de la manœuvre de stationnement.

9. Procédé selon l'une des revendications précédentes, **caractérisé en ce que** le procédé comprend l'évaluation simultanée d'une complexité d'une manœuvre de stationnement pour une pluralité d'emplacements de stationnement (14) et la délivrance en sortie commune de la complexité calculée de la manœuvre de stationnement dans la pluralité d'emplacements de stationnement (14).

10. Système d'assistance au stationnement (12) destiné à assister ou à réaliser une manœuvre de stationnement pour au moins un emplacement de stationnement (14) avec un véhicule (10), comprenant au moins un capteur (16, 18) et un dispositif d'affichage (20), l'au moins un capteur (16, 18) étant conçu pour recevoir une pluralité de grandeurs d'entrée destinées à décrire au moins un paramètre de la manœuvre de stationnement dans l'au moins un emplacement de stationnement (14), et le système d'assistance au stationnement (12) étant conçu pour mettre en œuvre un procédé selon l'une des revendications précédentes, le dispositif d'affichage (20) étant conçu pour afficher la complexité calculée de la manœuvre de stationnement dans l'au moins un emplacement de stationnement (14).

11. Système d'assistance au stationnement (12) selon la revendication 10, **caractérisé en ce que** le système d'assistance au stationnement (12) possède une interface utilisateur (20) servant à sélectionner un emplacement de stationnement (14) et
le système d'assistance au stationnement (12) est conçu pour assister ou réaliser la manœuvre de stationnement en se basant sur la sélection de l'emplacement de stationnement (14).

12. Système d'assistance au stationnement (12) selon la revendication 11, **caractérisé en ce que** l'interface utilisateur (20) est réalisée d'un seul tenant avec le dispositif d'affichage (20), de préférence sous la forme d'un écran tactile.

13. Véhicule (10) comprenant un système d'assistance au stationnement (12) selon l'une des revendications précédentes 10 à 12.
